# FASCICULE DE BREVET EUROPEEN

(11) **EP 3 512 720 B1**
(45) Date de publication et mention de la délivrance du brevet: **04.11.2020**
(21) Numéro de dépôt: 17771491.2
(22) Date de dépôt: 06.09.2017
(51) Int. Cl.: B60C 9/20

(54) **PNEUMATIQUE COMPORTANT TROIS COUCHES DE TRAVAIL**
REIFEN MIT DREI ARBEITSSCHICHTEN
TYRE COMPRISING THREE WORKING LAYERS

(30) Priorité: 16.09.2016 FR 1658697
(43) Date de publication de la demande: 24.07.2019
(73) Titulaire: Compagnie Générale des Etablissements Michelin, 63000 Clermont-Ferrand (FR)
(72) Inventeur: POULBOT, Agnès, 63040 Clermont-Ferrand Cedex 9 (FR); MANSUY, Philippe, 63040 Clermont-Ferrand Cedex 9 (FR)
(74) Mandataire: Le Cam, Stéphane Georges Elie
(86) Numéro de dépôt international: PCT/FR2017/052365
(87) Numéro de publication internationale: WO 2018/050988

(56) Documents cités:
- EP-A1- 0 568 870
- EP-A1- 3 028 873
- US-A1- 2006 027 300

## Description

La présente invention concerne un pneumatique, à armature de carcasse radiale comportant une armature de travail constituée de trois couches de travail.

Bien que non limitée à ce type d'applications, l'invention sera plus particulièrement décrite en référence à un pneumatique destiné à équiper des véhicules de type petits poids-lourds (« light truck » en anglais), tels que, par exemple des camions ou des camionnettes. Plus spécifiquement encore, l'invention sera décrite en référence à un pneumatique destiné à équiper des véhicules de type petits poids-lourds destinés à être montés sur des jantes de diamètres supérieurs ou égaux à 17 pouces et dont la pression d'utilisation est supérieure ou égale à 6 bars.

D'une manière générale dans les pneumatiques de type petit poids-lourds, l'armature de carcasse est ancrée de part et d'autre dans la zone du bourrelet et est surmontée radialement par une armature de sommet.

Pour ce type de pneumatique, l'armature de carcasse est usuellement constituée d'une couche d'éléments de renforcement métalliques, d'une couche d'aramide ou bien de deux couches d'éléments de renforcement textiles, autres que l'aramide.

L'armature de sommet, constituée d'un ensemble de couches de sommet, est habituellement constituée de deux couches de travail, superposées et formées de fils ou câbles parallèles dans chaque couche et croisés d'une couche à la suivante en faisant avec la direction circonférentielle des angles compris entre 10° et 45°. Lesdites couches de travail, formant l'armature de travail, sont habituellement recouvertes d'au moins une couche dite de protection et formée d'éléments de renforcement avantageusement élastiques. L'armature de sommet peut également comprendre une couche de fils ou câbles métalliques à faible extensibilité faisant avec la direction circonférentielle un angle compris entre 45° et 90°, cette couche, dite de triangulation, étant radialement située entre l'armature de carcasse et la première couche de sommet dite de travail. Les fils ou câbles métalliques de la couche de triangulation présentent habituellement un angle supérieur à celui des fils ou câbles de la première couche de sommet de travail et présentent une orientation par rapport à la direction circonférentielle identique à celle desdits fils ou câbles de la première couche de sommet de travail. La couche de triangulation présente, sous les différentes contraintes qu'elle subit, peu de déformations, la couche de triangulation ayant pour rôle essentiel de reprendre les efforts de compression transversale dont est l'objet l'ensemble des éléments de renforcement dans la zone du sommet du pneumatique.

Des câbles sont dits inextensibles lorsque lesdits câbles présentent sous une force de traction égale à 10% de la force de rupture un allongement relatif au plus égal à 0,2%.

Des câbles sont dits élastiques lorsque lesdits câbles présentent sous une force de traction égale à la charge de rupture un allongement relatif au moins égal à 3% avec un module tangent maximum inférieur à 150 GPa.

Des éléments de renforcement circonférentiels sont des éléments de renforcement qui font avec la direction circonférentielle des angles compris dans l'intervalle + 2,5°, - 2,5° autour de 0°.

La direction circonférentielle du pneumatique, ou direction longitudinale, est la direction correspondant à la périphérie du pneumatique et définie par la direction de roulement du pneumatique.

La direction transversale ou axiale du pneumatique est parallèle à l'axe de rotation du pneumatique.

La direction radiale est une direction coupant l'axe de rotation du pneumatique et perpendiculaire à celui-ci.

L'axe de rotation du pneumatique est l'axe autour duquel il tourne en utilisation normale.

Un plan radial ou méridien est un plan qui contient l'axe de rotation du pneumatique.

Le plan médian circonférentiel, ou plan équatorial, est un plan perpendiculaire à l'axe de rotation du pneu et qui divise le pneumatique en deux moitiés.

Certains pneumatiques actuels, dits "routiers", sont destinés à rouler à des vitesses moyennes élevées et sur des trajets de plus en plus longs, du fait de l'amélioration du réseau routier et de la croissance du réseau autoroutier dans le monde. L'ensemble des conditions, sous lesquelles un tel pneumatique est appelé à rouler, permet sans aucun doute un accroissement du nombre de kilomètres parcourus, l'usure du pneumatique étant moindre. Cette augmentation de la durée de vie en termes kilométriques, conjuguée au fait que de telles conditions d'usage sont susceptibles de se traduire, sous forte charge, par des températures sommet relativement élevées, nécessite une augmentation au moins proportionnelle du potentiel d'endurance de l'armature sommet des pneumatiques.

Il existe en effet des contraintes au niveau de l'armature de sommet et plus particulièrement des contraintes de cisaillement entre les couches de sommet qui, dans le cas d'une trop forte élévation de la température de fonctionnement au niveau des extrémités des couches de sommet, ont pour conséquence l'apparition et la propagation de fissures dans la gomme au niveau desdites extrémités. Le même problème existe dans le cas de bords de deux couches d'éléments de renforcement, ladite autre couche n'étant pas obligatoirement radialement adjacente à la première.

Dans le but d'améliorer l'endurance de l'armature sommet des pneumatiques, la demande française FR 2 728 510 propose de disposer, d'une part entre l'armature de carcasse et la nappe de travail d'armature de sommet, radialement la plus proche de l'axe de rotation, une nappe axialement continue, formée de câbles métalliques inextensibles faisant avec la direction circonférentielle un angle au moins égal à 60°, et dont la largeur axiale est au moins égale à la largeur axiale de la nappe de sommet de travail la plus courte, et d'autre part entre les deux nappes de sommet de travail une nappe additionnelle formée d'éléments métalliques, orientés sensiblement parallèlement à la direction circonférentielle.

Le document US 2008/0060738 décrit également la présence de couches d'éléments renforcement orientés circonférentiellement.

Le document EP 0568870 décrit une armature sommet comportant une nappe dont les éléments de renforcement présentent des angles avec la direction circonférentielle supérieurs à 55°.

L'augmentation du nombre de nappes dans l'armature sommet permet en outre d'améliorer les performances des pneumatiques lors de roulage sur des obstacles tels que des cailloux.

Quelles que soient les solutions envisagées telles que présentées précédemment, la multiplicité des nappes d'armature de sommet conduit à une masse plus importante du pneumatique et à des coûts de fabrication des pneumatiques plus importants.

Les inventeurs se sont donnés pour mission de proposer des pneumatiques pour ce type d'application présentant une masse réduite et des coûts de fabrication inférieurs.

Le document EP 3 028 873 décrit un pneumatique comportant une armature de sommet constituée d'au moins trois nappes.

Le document US 2006/027300 décrit un pneumatique dont l'armature sommet est constituée de trois nappes.

Par ailleurs, l'usage de pneumatiques sur des véhicules de type petits poids-lourds peut conduire les pneumatiques à subir des chocs lors de roulages sur des sols par exemple caillouteux. Ces chocs sont bien entendu néfastes quant aux performances en termes d'endurance

Un but de l'invention est de fournir des pneumatiques pour véhicules "Petits Poids-Lourds" allégés, dont les performances d'usure et dont les performances d'endurance sont conservées notamment au regard des chocs subis lors de roulages sur des sols caillouteux.

Ce but est atteint selon l'invention par un pneumatique à armature de carcasse radiale pour véhicule de type petit poids-lourd comprenant une armature de sommet constituée de trois couches de sommet de travail d'éléments de renforcement métalliques, elle-même coiffée radialement d'une bande de roulement, ladite bande de roulement étant réunie à deux bourrelets par l'intermédiaire de deux flancs, les éléments de renforcement des deux couches de travail radialement les plus intérieures étant orientés de part et d'autre de la direction circonférentielle, les angles, formés avec la direction circonférentielle, des éléments de renforcement de la couche de travail radialement la plus intérieure étant compris entre 30° et 45°, les éléments de renforcement des deux couches de travail radialement les plus extérieures étant orientés selon la même direction par rapport à la direction circonférentielle et formant avec la direction circonférentielle des angles compris entre 12° et 20°, la différence entre les valeurs absolues des angles des éléments de renforcement de chacune des couches de travail radialement les plus extérieures étant inférieure à 5° et la différence entre les valeurs absolues des angles des éléments de renforcement des couches de travail radialement les plus intérieures étant supérieure à 14°.

Au sens de l'invention, une orientation de part et d'autre de la direction circonférentielle des éléments de renforcement des deux couches de travail radialement les plus intérieures signifie que, un sens de rotation étant fixé, le signe de l'angle formé par rapport à la direction circonférentielle par les éléments de renforcement de l'une des deux couches de travail est opposé à celui de l'angle formé par rapport à la direction circonférentielle par les éléments de renforcement de l'autre couche de travail.

De préférence selon l'invention, les éléments de renforcement des deux couches de travail radialement les plus extérieures forment avec la direction circonférentielle des angles identiques.

De préférence également selon l'invention, la différence entre les valeurs absolues des angles des éléments de renforcement des couches de travail radialement les plus intérieures est inférieure à 25°.

Les mesures d'angles sont selon l'invention réalisées au niveau du plan médian circonférentiel.

De tels pneumatiques selon l'invention présentent effectivement une masse réduite et des coûts de fabrication inférieurs à ceux de pneumatiques plus usuels et les résultats obtenus avec de tels pneumatiques ont effectivement mis en évidence que les performances en termes d'endurance sont conservées voire améliorées notamment pour ce qui concerne les résultats observés lors de roulage sur sol caillouteux.

Contre toute attente, les résultats ont effectivement mis en évidence que les pneumatiques selon l'invention peuvent être allégés en diminuant le nombre de couches constitutives de l'armature sommet tout en conservant voire améliorant les propriétés d'endurance du sommet du pneumatique notamment à l'égard de chocs apparaissant sur la bande de roulement par exemple lors de roulage sur sol caillouteux. Il est en effet connu de l'homme du métier que pour améliorer les performances d'endurance de l'armature sommet d'un pneumatique à l'égard de ce type de chocs, il est usuel d'augmenter le nombre de couches d'éléments de renforcement.

Les inventeurs ont su mettre en évidence que l'association des trois couches de travail selon l'invention autorise une meilleure répartition des tensions entre les éléments de renforcement des trois couches de travail lors de roulage sur sol caillouteux et semble favorable à une amélioration des performances d'endurance notamment lors de roulages sur des obstacles de type cailloux. En effet, en comparaison des architectures plus usuelles de ce type de pneumatique, le nombre de couches constituant l'armature sommet diminue et l'association avec les angles tels qu'ils sont définis conduisent à ses performances satisfaisantes en termes d'endurance, l'armature sommet étant allégée. L'angle plus important des éléments de renforcements de la couche de travail radialement la plus intérieure associée aux angles sensiblement équivalent des éléments de renforcement des deux couches radialement les plus extérieures semblent permettre une meilleure répartition des contraintes supportées par les couches de travail lors de roulage sur des obstacles.

Les inventeurs proposent ainsi deux couches de travail radialement les plus extérieures dont les angles formés entre les éléments de renforcement et la direction circonférentielle sont sensiblement égaux et peuvent être plus petits que les angles usuellement appliqués pour des couches de travail de ce type de pneumatique.

Par ailleurs, les deux couches de travail radialement les plus intérieures sont telles que la différence entre les valeurs absolues des angles des éléments de renforcement des couches de travail radialement les plus intérieures est supérieure à 14°, ce qui est bien plus que pour des couches de travail de pneumatiques plus usuels.

Ces caractéristiques d'angles des trois couches de travail semblent permettre de conserver des propriétés d'endurance du pneumatique selon l'invention tout à fait satisfaisantes.

Selon un mode de réalisation préféré de l'invention, les trois couches de sommet de travail d'éléments de renforcement présentent la même force rupture par unité de largeur.

La force rupture par unité de largeur d'une couche d'éléments de renforcement est déterminée à partir des mesures effectuées sur les éléments de renforcement et de la densité d'éléments de renforcement de la couche, elle-même définie par le nombre d'éléments de renforcement par unité de largeur.

La mesure de densité s'effectue en comptant visuellement le nombre de fils présents sur un échantillon de tissu non déformé d'une largeur de 10 cm. Le nombre de fils comptés est directement la valeur de densité du tissu en fils/dm.

En ce qui concerne les fils ou câbles métalliques, les mesures de force à la rupture (charge maximale en N), de résistance à la rupture (en MPa), d'allongement à la rupture (allongement total en %) et de module (en GPa) sont effectuées en traction selon la norme ISO 6892 de 1984.

Avantageusement encore selon l'invention, la force rupture par unité de largeur de chacune des couches de sommet de travail est comprise entre 50 et 80 daN/mm.

La combinaison des caractéristiques des couches de travail selon l'invention autorise des distances entre les éléments de renforcement et des diamètre desdits éléments de renforcement conduisant à des propriétés de résistance à la rupture des couches de travail suffisantes mais inférieures à celles des couches de travail d'un pneumatique de conception plus usuelle, notamment pour favoriser encore la réduction de la masse du pneumatique, de ses coûts de fabrication et de ses propriétés de résistance au roulement.

Ainsi avantageusement, le diamètre des éléments de renforcement des couches de travail est inférieur à 0.85 mm.

Avantageusement encore, selon l'invention, la distance entre les éléments de renforcement au sein d'une même couche de sommet de travail, mesurée selon la normale à la direction de la ligne moyenne du fil, est inférieure à 0.60 mm.

La distance entre les éléments de renforcements d'une couche de travail est selon l'invention mesurée au niveau du plan médian circonférentiel.

Selon ces variantes de l'invention, il est possible de réaliser des pneumatiques allégés en comparaison des pneumatiques plus usuels dans lesquels les éléments de renforcement présentent des diamètres plus importants.

Les inventeurs ont su mettre en évidence que cet allégement du pneumatique est encore lié à une diminution de l'épaisseur de l'armature de sommet du fait de la réduction du diamètre des éléments de renforcement des couches de travail. Cette diminution du diamètre des éléments de renforcement peut en outre s'associer à des épaisseurs de mélange polymérique réduites par rapport à celles des pneumatiques usuels et ainsi une masse globale de l'armature sommet encore réduite par rapport à celle des pneumatiques usuels.

Les inventeurs ont par ailleurs su mettre en évidence qu'il était possible de réduire les distances entre les éléments de renforcement au sein d'une même couche de sommet de travail par rapport à des conceptions plus usuelles sans nuire aux propriétés d'endurance du pneumatique. Il est en effet usuel de maintenir une distance minimum entre les éléments de renforcement d'une même couche de travail pour limiter les phénomènes de propagation de fissures d'un élément à l'autre.

Les inventeurs pensent que la présence de trois couches de travail diminue les risques d'apparition de fissures au niveau des extrémités des couches de travail du fait de la répartition des contraintes entre les couches de travail soumises à des effets de clivage. Cette diminution de l'amorce de fissure conduit ainsi à la possibilité de réduire les distances entre les éléments de renforcement.

Cette diminution des distances entre les éléments de renforcement d'une même couche de travail contribue par ailleurs à une diminution des risques de perforation du sommet du pneumatique.

Selon une variante avantageuse de l'invention, la largeur de la couche de travail radialement la plus intérieure est supérieure à la largeur des deux couches de travail radialement les plus extérieures.

La couche de travail radialement la plus intérieure, dont les éléments de renforcement forment avec la direction circonférentielle les angles les plus grands, est axialement la plus large pour limiter au mieux les amorces de fissuration au sein des mélanges lors de roulage.

Avantageusement encore, la largeur de la couche de travail radialement la plus extérieure est inférieure à la largeur des deux couches de travail radialement les plus intérieures.

La couche radialement la plus extérieure contribue à la meilleure répartition des contraintes entre les couches de travail lors de roulage et a pu être réduite axialement sans nuire à cette reprise des contraintes tout en assurant en plus une fonction de protection aux agressions subies par la bande de roulement, celles-ci étant les plus importantes autour de la partie centrale de la bande roulement.

Selon une réalisation préférée de l'invention, la largeur de la couche de travail radialement la plus intérieure est supérieure 0.9 fois la largeur de la bande de roulement.

De préférence également, la largeur de la couche de travail radialement entre la couche de travail radialement la plus intérieure et la couche de travail radialement la plus extérieure est supérieure 0.8 fois la largeur de la bande de roulement.

De préférence encore, la largeur de la couche de travail radialement la plus extérieure est comprise entre 0.35 et 0.75 fois la largeur de la bande de roulement.

Les largeurs axiales des couches d'éléments de renforcement sont mesurées sur une coupe transversale d'un pneumatique, le pneumatique étant donc dans un état non gonflé.

La largeur axiale de la bande de roulement est mesurée entre deux extrémités d'épaulement lorsque le pneumatique est monté sur sa jante de service et gonflé à sa pression nominale.

Une extrémité d'épaulement est définie, dans la zone de l'épaule du pneumatique, par le point de tangence entre une droite, formant un angle de 30° avec la direction axiale, et la surface extérieure du pneumatique.

D'autres détails et caractéristiques avantageux de l'invention ressortiront ci-après de la description des exemples de réalisation de l'invention en référence à la figure qui représente une vue méridienne d'un schéma d'un pneumatique selon un mode de réalisation de l'invention.

La figure n'est pas représentée à l'échelle pour en simplifier la compréhension. La figure ne représentent qu'une demi-vue d'un pneumatique qui se prolonge de manière symétrique par rapport à l'axe XX' qui représente le plan médian circonférentiel, ou plan équatorial, d'un pneumatique.

Sur la figure, le pneumatique 1, de dimension 215/75 R 17.5 XZE2 comprend une armature de carcasse radiale 2 ancrée dans deux bourrelets, non représentés sur la figure. L'armature de carcasse 2 est formée d'une seule couche de câbles métalliques. Ils comportent encore une bande de roulement 5.

Sur la figure, l'armature de carcasse 2 est frettée conformément à l'invention par une armature de sommet 4, formée radialement de l'intérieur à l'extérieur :
- d'une première couche de travail 41 formée de câbles métalliques orientés d'un angle égal à +35°,
- d'une deuxième couche de travail 42 formée de câbles métalliques orientés d'un angle égal à -16°,
- d'une troisième couche de travail 43 formée de câbles métalliques orientés d'un angle égal à -16°.

Les câbles métalliques constituant les éléments de renforcement des trois couches de travail sont des câbles de formule 4.32 présentant un diamètre de 0.84 mm. Ils sont répartis dans chacune des couches de travail avec une distance entre les éléments de renforcement, mesurée selon la normale à la direction de la ligne moyenne du fil égale à 0.56 mm.

La largeur axiale L₄₁ de la première couche de travail 41 est égale à 170 mm.

La largeur axiale L₄₂ de la deuxième couche de travail 42 est égale à 154 mm.

La largeur axiale L₄₃ de la troisième couche de travail 43 est égale à 72 mm.

La largeur axiale de la bande de roulement L₅ est égale à 182 mm.

La masse cumulée des trois couches de travail 41, 42, 43, comprenant la masse des câbles métalliques et des mélanges de calandrage, se monte ainsi à 2.70 Kg.

Le pneumatique selon l'invention est comparé à un pneumatique de référence de même dimension qui diffère du pneumatique selon l'invention par son armature de sommet formée radialement de l'intérieur à l'extérieur :
- d'une couche de triangulation formée de câbles métalliques inextensibles 9.28 non frettés, continus sur toute la largeur de la nappe, orientés d'un angle égal à +65°,
- d'une première couche de travail formée de câbles métalliques inextensibles 9.28 non frettés, continus sur toute la largeur de la nappe, orientés d'un angle égal à +26°,
- d'une seconde couche de travail formée de câbles métalliques inextensibles 9.28 non frettés, continus sur toute la largeur de la nappe, orientés d'un angle égal à -18° et croisés aux câbles métalliques de la première couche de travail,
- d'une couche de protection formées de câbles métalliques inextensibles 9.28 non frettés, continus sur toute la largeur de la nappe, orientés d'un angle égal à -18°.

Les câbles métalliques inextensibles 9.28 des couches de travail du pneumatique de référence sont répartis dans chacune des couches de travail avec une distance entre les éléments de renforcement, mesurée selon la normale à la direction de la ligne moyenne du fil égale à 0.93 mm.

La masse cumulée des couches de travail du pneumatique de référence, de la couche de protection et de la couche de triangulation, comprenant la masse des câbles métalliques et des mélanges de calandrage, se monte à 4.15 Kg.

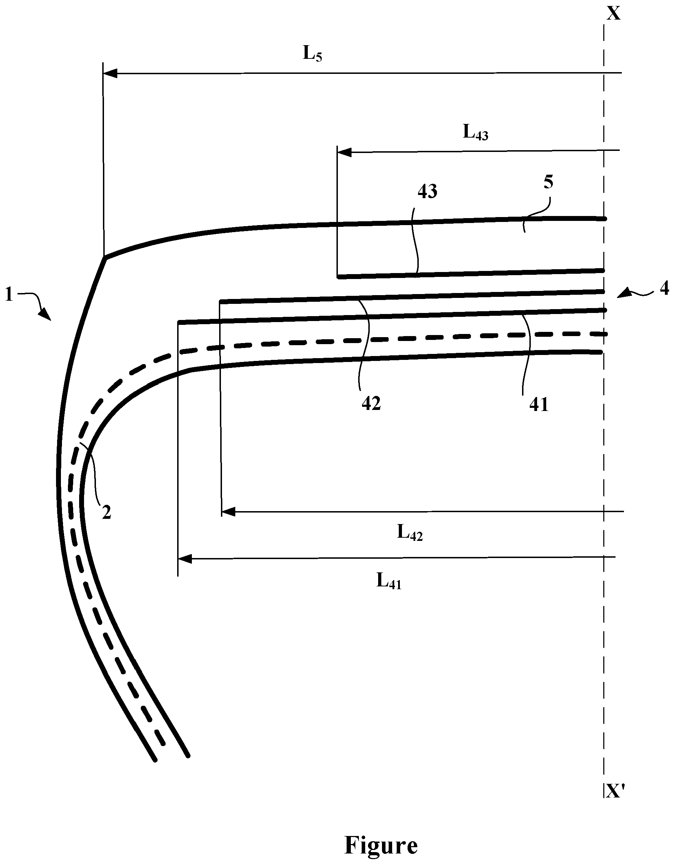

Des essais ont été réalisés avec des pneumatiques réalisés selon l'invention conformément à la figure 1 et avec le pneumatique de référence.

Des premiers essais d'endurance ont été réalisés sur une machine de test imposant à chacun des pneumatiques un roulage ligne droite à une vitesse égale à l'indice de vitesse maximum prescrit pour ledit pneumatique (speed index) sous une charge initiale de 2000 kg progressivement augmentée.

D'autres essais d'endurance ont été réalisés sur une machine de tests imposant de façon cyclique un effort transversal et une surcharge dynamique aux pneumatiques.

Les essais ont été réalisés pour les pneumatiques selon l'invention avec des conditions identiques à celles appliquées aux pneumatiques de référence.

Les essais ainsi réalisés ont montré que les distances parcourues lors de chacun de ces tests sont sensiblement identiques pour les pneumatiques selon l'invention et les pneumatiques de référence. Il apparaît donc que les pneumatiques selon l'invention présentent des performances sensiblement équivalentes en termes d'endurance, et plus particulièrement en termes de résistance à la fissuration, à celles des pneumatiques de référence lors de roulage sur des sols bitumineux.

Des tests visant à caractériser la résistance à la rupture d'une armature de sommet de pneumatique soumise à des chocs ont également été réalisés. Ces tests consistent en l'enfoncement d'un polar de forme cylindrique de diamètre égal à 0.75 pouce, soit 19.05 mm, sur la bande de roulement du pneumatique gonflé à une pression de 6.9 bars Les valeurs expriment l'énergie nécessaire pour obtenir la rupture du bloc sommet, c'est-à-dire la rupture de toutes les couches de sommet. Les valeurs sont exprimées à partir d'une base 100 correspondant à la valeur mesurée pour le pneumatique de référence.

| | |
|---|---|
| Référence | 100 |
| Invention | 117 |

Ces résultats montrent que malgré un allégement du pneumatique par une diminution de la masse de son armature sommet, l'énergie à rupture lors d'un choc sur la surface de la bande de roulement est significativement supérieure.

Par ailleurs, des mesures de résistance au roulement ont été réalisées.

Les résultats des mesures sont présentés dans le tableau suivant ; elles sont exprimées en Kg/t, une valeur de 100 étant attribuée au pneumatique de référence.

| | |
|---|---|
| Référence | 100 |
| Invention | 96 |

## Revendications

1. Pneumatique (1) à armature de carcasse radiale (2) pour véhicule de type petit poids-lourd comprenant une armature de sommet (4) constituée de trois couches de sommet de travail (41, 42, 43) d'éléments de renforcement métalliques, elle-même coiffée radialement d'une bande de roulement (5), ladite bande de roulement (5) étant réunie à deux bourrelets par l'intermédiaire de deux flancs, les éléments de renforcement des deux couches de travail (41, 42) radialement les plus intérieures étant orientés de part et d'autre de la direction circonférentielle, les éléments de renforcement des deux couches de travail (42, 43) radialement les plus extérieures étant orientés selon la même direction par rapport à la direction circonférentielle et formant avec la direction circonférentielle des angles compris entre 12° et 20°, la différence entre les valeurs absolues des angles des éléments de renforcement de chacune des couches de travail (42, 43) radialement les plus extérieures étant inférieure à 5° **caractérisé en ce que** les angles, formés avec la direction circonférentielle, des éléments de renforcement de la couche de travail (41) radialement la plus intérieure sont compris entre 30° et 45°et **en ce que** la différence entre les valeurs absolues des angles des éléments de renforcement des couches de travail (41, 42) radialement les plus intérieures est supérieure à 14°.

2. Pneumatique (1) selon la revendication 1, **caractérisé en ce que** les éléments de renforcement des deux couches de travail (42, 43) radialement les plus extérieures forment avec la direction circonférentielle des angles identiques.

3. Pneumatique (1) selon la revendication 1 ou 2, **caractérisé en ce que** la différence entre les valeurs absolues des angles des éléments de renforcement des couches de travail (41, 42) radialement les plus intérieures est inférieure à 25°.

4. Pneumatique (1) selon l'une des revendications précédentes, **caractérisé en ce que** les trois couches de sommet de travail (41, 42, 43) d'éléments de renforcement présentent la même force rupture par unité de largeur.

5. Pneumatique (1) selon l'une des revendications précédentes, **caractérisé en ce que** la force rupture par unité de largeur de chacune des couches de sommet de travail (41, 42, 43) est comprise entre 50 et 80 daN/mm.

6. Pneumatique (1) selon l'une des revendications précédentes, **caractérisé en ce que** le diamètre des éléments de renforcement des couches de travail (41, 42, 43) est inférieur à 0.85.

7. Pneumatique (1) selon l'une des revendications précédentes, **caractérisé en ce que** la distance entre les éléments de renforcement au sein d'une même couche de sommet de travail, mesurée selon la normale à la direction de la ligne moyenne du fil, est inférieure à 0.80 mm.

8. Pneumatique (1) selon l'une des revendications précédentes, **caractérisé en ce que** la largeur L₄₁ de la couche de travail (41) radialement la plus intérieure est supérieure à la largeur des deux couches de travail (42, 43) radialement les plus extérieures.

9. Pneumatique (1) selon l'une des revendications précédentes, **caractérisé en ce que** la largeur L₄₃ de la couche de travail (43) radialement la plus extérieure est inférieure à la largeur des deux couches de travail (41, 42) radialement les plus intérieures.

10. Pneumatique (1) selon l'une des revendications précédentes, **caractérisé en ce que** la largeur L₄₁ de la couche de travail (41) radialement la plus intérieure est supérieure 0.9 fois la largeur L₅ de la bande de roulement (5).

11. Pneumatique (1) selon l'une des revendications précédentes, **caractérisé en ce que** la largeur L₄₂ de la couche de travail (42) radialement entre la couche de travail (41) radialement la plus intérieure et la couche de travail (43) radialement la plus extérieure est supérieure 0.8 fois la largeur L₅ de la bande de roulement (5).

12. Pneumatique (1) selon l'une des revendications précédentes, **caractérisé en ce que** la largeur L₄₃ de la couche de travail (43) radialement la plus extérieure est comprise entre 0.35 et 0.75 fois la largeur L₅ de la bande de roulement (5).

## Patentansprüche

1. Luftreifen (1) mit radialer Karkassenbewehrung (2) für ein Fahrzeug von der Art kleiner Lastkraftwagen, der eine Scheitelbewehrung (4) bestehend aus drei Arbeitsscheitelschichten (41, 42, 43) von metallischen Verstärkungselementen enthält, die selbst radial von einem Laufstreifen (5) überdeckt wird, wobei der Laufstreifen (5) über zwei Flanken mit zwei Wülsten vereint wird, wobei die Verstärkungselemente der zwei radial am weitesten innen liegenden Arbeitsschichten (41, 42) zu beiden Seiten der Umfangsrichtung ausgerichtet sind, wobei die Verstärkungselemente der zwei radial am weitesten außen liegenden Arbeitsschichten (42, 43) gemäß der gleichen Richtung bezüglich der Umfangsrichtung ausgerichtet sind und mit der Umfangsrichtung Winkel zwischen 12° und 20° bilden, wobei der Unterschied zwischen den Absolutwerten der Winkel der Verstärkungselemente jeder der radial am weitesten außen liegenden Arbeitsschichten (42, 43) kleiner als 5° ist, **dadurch gekennzeichnet, dass** die mit der Umfangsrichtung gebildeten Winkel der Verstärkungselemente der radial am weitesten innen liegenden Arbeitsschicht (41) zwischen 30° und 45° liegen, und dass der Unterschied zwischen den Absolutwerten der Winkel der Verstärkungselemente der radial am weitesten innen liegenden Arbeitsschichten (41, 42) größer als 14° ist.

2. Luftreifen (1) nach Anspruch 1, **dadurch gekennzeichnet, dass** die Verstärkungselemente der zwei radial am weitesten außen liegenden Arbeitsschichten (42, 43) gleiche Winkel mit der Umfangsrichtung bilden.

3. Luftreifen (1) nach Anspruch 1 oder 2, **dadurch gekennzeichnet, dass** der Unterschied zwischen den Absolutwerten der Winkel der Verstärkungselemente der radial am weitesten innen liegenden Arbeitsschichten (41, 42) kleiner als 25° ist.

4. Luftreifen (1) nach einem der vorhergehenden Ansprüche, **dadurch gekennzeichnet, dass** die drei Arbeitsscheitelschichten (41, 42, 43) von Verstärkungselementen die gleiche Reißkraft pro Breiteneinheit aufweisen.

5. Luftreifen (1) nach einem der vorhergehenden Ansprüche, **dadurch gekennzeichnet, dass** die Reißkraft pro Breiteneinheit jeder der Arbeitsscheitelschichten (41, 42, 43) zwischen 50 und 80 daN/mm liegt.

6. Luftreifen (1) nach einem der vorhergehenden Ansprüche, **dadurch gekennzeichnet, dass** der Durchmesser der Verstärkungselemente der Arbeitsschichten (41, 42, 43) kleiner als 0,85 ist.

7. Luftreifen (1) nach einem der vorhergehenden Ansprüche, **dadurch gekennzeichnet, dass** der Abstand zwischen den Verstärkungselementen innerhalb einer gleichen Arbeitsscheitelschicht, gemessen gemäß der Normalen zur Richtung der Mittellinie des Drahts, kleiner als 0,80 mm ist.

8. Luftreifen (1) nach einem der vorhergehenden Ansprüche, **dadurch gekennzeichnet, dass** die Breite L₄₁ der radial am weitesten innen liegenden Arbeitsschicht (41) größer als die Breite der zwei radial am weitesten außen liegenden Arbeitsschichten (42, 43) ist.

9. Luftreifen (1) nach einem der vorhergehenden Ansprüche, **dadurch gekennzeichnet, dass** die Breite L₄₃ der radial am weitesten außen liegenden Arbeitsschicht (43) kleiner als die Breite der zwei radial am weitesten innen liegenden Arbeitsschichten (41, 42) ist.

10. Luftreifen (1) nach einem der vorhergehenden Ansprüche, **dadurch gekennzeichnet, dass** die Breite L₄₁ der radial am weitesten innen liegenden Arbeitsschicht (41) größer als das 0,9-Fache der Breite L₅ des Laufstreifens (5) ist.

11. Luftreifen (1) nach einem der vorhergehenden Ansprüche, **dadurch gekennzeichnet, dass** die Breite L₄₂ der radial zwischen der radial am weitesten innen liegenden Arbeitsschicht (41) und der radial am weitesten außen liegenden Arbeitsschicht (43) liegenden Arbeitsschicht (42) größer als das 0,8-Fache der Breite L₅ des Laufstreifens (5) ist.

12. Luftreifen (1) nach einem der vorhergehenden Ansprüche, **dadurch gekennzeichnet, dass** die Breite L₄₃ der radial am weitesten außen liegenden Arbeitsschicht (43) zwischen dem 0,35- und dem 0,75-Fachen der Breite L₅ des Laufstreifens (5) liegt.

## Claims

1. Tyre (1) with a radial carcass reinforcement (2) for a vehicle of the light truck type, comprising a crown reinforcement (4) made up of three working crown layers (41, 42, 43) of metal reinforcing elements, itself capped radially by a tread (5), said tread (5) being connected to two beads by two sidewalls, the reinforcing elements of the two radially innermost working layers (41, 42) being oriented on either side of the circumferential direction, the reinforcing elements of the two radially outermost working layers (42, 43) being oriented in the same direction with respect to the circumferential direction and form angles of between 12° and 20° with the circumferential direction, the difference between the absolute values of the angles of the reinforcing elements of each of the radially outermost working layers (42, 43) being less than 5°, **characterized in that** the angles, formed with the circumferential direction, of the reinforcing elements of the radially innermost working layer (41) are between 30° and 45°, and **in that** the difference between the absolute values of the angles of the reinforcing elements of the radially innermost working layers (41, 42) is greater than 14°.

2. Tyre (1) according to Claim 1, **characterized in that** the reinforcing elements of the two radially outermost working layers (42, 43) form identical angles with the circumferential direction.

3. Tyre (1) according to Claim 1 or 2, **characterized in that** the difference between the absolute values of the angles of the reinforcing elements of the radially innermost working layers (41, 42) is less than 25°.

4. Tyre (1) according to one of the preceding claims, **characterized in that** the three working crown layers (41, 42, 43) of reinforcing elements have the same breaking force per unit width.

5. Tyre (1) according to one of the preceding claims, **characterized in that** the breaking force per unit width of each of the working crown layers (41, 42, 43) is between 50 and 80 daN/mm.

6. Tyre (1) according to one of the preceding claims, **characterized in that** the diameter of the reinforcing elements of the working layers (41, 42, 43) is less than 0.85 mm.

7. Tyre (1) according to one of the preceding claims, **characterized in that** the distance between the reinforcing elements within one and the same working crown layer, measured along the normal to the direction of the mean line of the thread, is less than 0.80 mm.

8. Tyre (1) according to one of the preceding claims, **characterized in that** the width L₄₁ of the radially innermost working layer (41) is greater than the width of the two radially outermost working layers (42, 43).

9. Tyre (1) according to one of the preceding claims, **characterized in that** the width L₄₃ of the radially outermost working layer (43) is less than the width of the two radially innermost working layers (41, 42).

10. Tyre (1) according to one of the preceding claims, **characterized in that** the width L₄₁ of the radially innermost working layer (41) is greater than 0.9 times the width L₅ of the tread (5).

11. Tyre (1) according to one of the preceding claims, **characterized in that** the width L₄₂ of the working layer (42) radially between the radially innermost working layer (41) and the radially outermost working layer (43) is greater than 0.8 times the width L₅ of the tread (5).

12. Tyre (1) according to one of the preceding claims, **characterized in that** the width L₄₃ of the radially outermost working layer (43) is between 0.35 and 0.75 times the width L₅ of the tread (5).
